# EUROPEAN PATENT SPECIFICATION

(11) **EP 1 736 963 B1**
(45) Date of publication and mention of the grant of the patent: **27.08.2008**
(21) Application number: 06113577.8
(22) Date of filing: 05.05.2006
(51) Int. Cl.: G10L 13/06, G06F 17/30, G10L 15/22

(54) **Back-end database reorganization for application-specific concatenative text-to-speech systems**
Reorganisation nachgestellter Datenbanken für anwendungsspezifische konkatenative Text-zu-Sprache-Systeme
Réorganisation des bases de données finales des systèmes de concaténation du passage de la parole au texte, à application spécifique

(30) Priority: 21.06.2005 EP 05105449
(43) Date of publication of application: 27.12.2006
(73) Proprietor: International Business Machines Corporation, Armonk, NY 10504 (US)
(72) Inventor: Kunzmann, Siegfried, 69126 Heidelberg (DE); Fischer, Volker, 69181 Leimen (DE)
(74) Representative: Duscher, Reinhard

(56) References cited:
- EP-A- 1 205 907
- ANDREW CRONK AND MICHAEL MACON: "Optimized Stopping Criteria for Tree-Based Unit Selection in Concatenative Synthesis" ICSLP, October 1998 (1998-10), page P680, XP007000493 Australia
- R. E. DONOVAN: "Topics in decision tree based speech synthesis" COMPUTER SPEECH AND LANGUAGE, vol. 17, 30 July 2002 (2002-07-30), pages 43-67, XP004418862 NY, USA
- SINGH R ET AL: "DOMAIN ADDUCED STATE TYING FOR CROSS-DOMAIN ACOUSTIC MODELLING" EUROSPEECH, vol. 4, 1999, page 1707, XP007001326 Hungary
- GUO QING ET AL: "VOCABULARY-BASED ACOUSTIC MODEL TRIM DOWN AND TASK ADAPTATION" ICSLP, 16 October 2000 (2000-10-16), XP007010463 Beijing, China

## Description

### 1. BACKGROUND OF THE INVENTION

### 1.1. FIELD OF THE INVENTION

The present invention relates to computer-generated text-to-speech conversion. It relates in particular to a method and system for updating a Concatenative Text-To-Speech (CTTS) system with a speech database from a base version to a new version.

### 1.2. DESCRIPTION AND DISADVANTAGES OF PRIOR ART

Natural speech output is one of the key elements for a wide acceptance of voice enabled applications and is indispensable for interfaces that can not make use of other output modalities, like e.g. plain text or graphics. Recently, major improvement in the field of text-to-speech synthesis has been made by the development of so-called "corpus-based" methods: Systems like the IBM trainable text-to-speech system or AT&T's NextGen make use of explicit or parametric representations of short segments of natural speech, referred to herein as *"synthesis units"* that are extracted from a large set of recorded utterances in a preparative synthesizer training session, and which are retrieved, further manipulated, and concatenated during a subsequent speech synthesis runtime session.

In more detail, and with a particular focus on the disadvantages of prior art such methods for operating a CTTS system comprise the following features:
a) the CTTS system uses natural speech - stored in either its original form or any parametric representation - obtained by recording some base text which is designed to cover a variety of envisaged applications;
b) in a preparative step (synthesizer construction) the recorded speech is dissected by a respective computer program into a plurality of synthesis units which are stored in a base speech database;
c) said synthesis units are distinguished in said base speech database with respect to their acoustic and/or prosodic contexts, which are derived from and thus are specific for said base text;
d) synthetic speech is constructed by a concatenation and appropriate modification of said synthesis units.

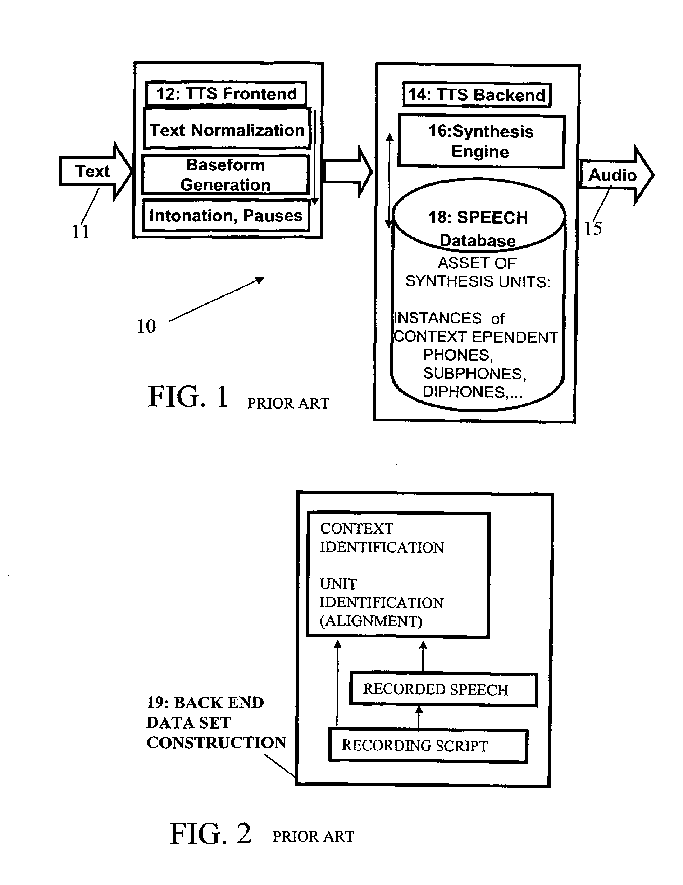

With reference to figure 1 which depicts a prior art schematic block diagram CTTS system, prior art speech synthesizers 10 basically do a run-time conversion from text to speech, see Audio arrow 15. For that purpose, a linguistic front-end component 12 of system 10 performs text normalization, text-to-phone unit conversion (baseform generation), and prosody prediction, i.e. creation of an intonation contour that describes energy, pitch, and duration of the required synthesis units.

The pre-processed text, the requested sequence of synthesis units, and the desired intonation contour are passed to a back-end concatenation module 14 that generates the synthetic speech in a synthesis engine 16. For that purpose, a back-end database 18 of speech segments is searched for units that best match the acoustic/prosodic specifications computed by the front-end.

The back-end database 18 stores an explicit or parametric representation of the speech data. Because synthesis units, like e.g. phones, sub-phones, diphones, or syllables are well known to sound different when articulated in different acoustic and/or prosodic contexts, a large number of these units have to be stored in the synthesizer's database in order to enable the system to produce high quality speech output across a broad variety of applications or domains. Therefore, since due to combinatorial reasons it is prohibitive to search all instances of a required synthesis unit during runtime, a fast selection of suitable candidate segments according to some criterion is generally needed.

With reference to figure 2 in state-of-the-art systems this is usually achieved by taking into consideration the acoustic and/or prosodic context of the speech segments. For that purpose, decision trees for the identification of relevant contexts are created during system construction 19. The leaves of these trees represent individual acoustic and/or prosodic contexts that significantly influence the short term spectral and/or prosodic properties of the synthesis units, and thus their sound.
The traversal of these trees during runtime is fast and restricts the number of segments to consider in the back-end search to only a few out of several hundreds or thousands.

While concatenative text-to-speech synthesis is able to produce synthetic speech of remarkable quality, it is also true that such systems sound most natural for applications and/or domains that have been thoroughly covered by the recording script -i.e., the above-mentioned base text - and are thus present in the speech database; different speaking styles and acoustic contexts are only two reasons that help to explain this observation.

Since it is obviously impossible to record speech material for all possible applications in advance, both the construction of synthesizers for limited domains and adaptation with additional, domain specific prompts has been proposed in the literature. While limited domain synthesis constructs a specialized synthesizer for each individual application, domain adaptation adds speech segments from a domain specific speech corpus to an already existing, general synthesizer.

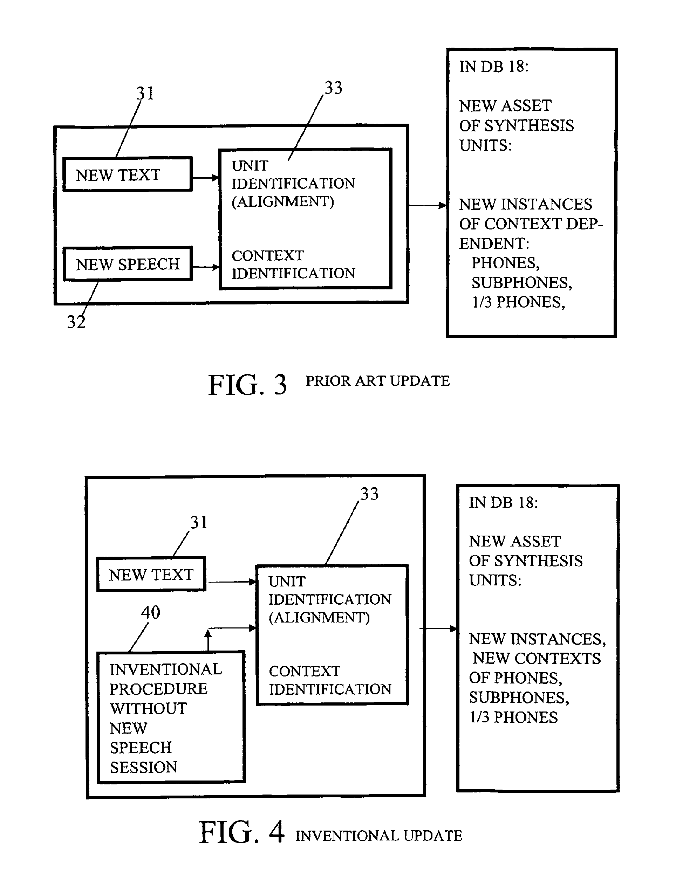

Thus, and with reference to figure 3 and to the wording used in the claims, when an existing CTTS system is to be updated in order to either adapt it to a new domain or to deal with changes made to existing applications (e.g. a re-design of the prompts to be generated by a conversational dialog system), in prior art methods and systems a step e) is performed of specifying a new, domain/application specific text corpus 31, which usually is not covered by the basic speech database. Disadvantageously, the new text must be read by a professional human speaker in a new recording session 32, and the system construction process 19 needs to be carried out in order to generate a speech database 18 adapted to the new application.

Therefore, while both approaches - limited domain synthesis and domain adaptation as described before - can help to increase the quality of synthetic speech for a particular application, these methods are disadvantageously time-consuming and expensive, since a professional human speaker (preferably the original voice talent) has to be available for the update speech session, and because of the need for expert phonetic-linguistic skills in the synthesizer construction step 19.

A prior art document "Optimised Stopping Criteria for Tree-Based Unit Selection in Concatenative Synthesis", Andrew Cronk and Michael Macon, Procedures of the International Conference on Spoken Language Processing (ICSLP), Sydney, Australia, 1998, discloses a concatenative text to speech synthesis method, which proposes to recombine elements of a decision tree in order to determine a most suitable sub-tree for the purpose of providing a unit selection method based on tree-structured clustering of data.

Disadvantageously, this prior art method teaches inefficient selection means for identifying the acoustic context classes which need to be adapted in case an update of the units database is desired.

### 1.1. OBJECTIVES OF THE INVENTION

It is thus an objective of the present invention to reduce the effort to technically adapt an existing CTTS system to a given new or more specific application area.

### 2. SUMMARY AND ADVANTAGES OF THE INVENTION

This objective of the invention is achieved by the features stated in enclosed independent claims. Further advantageous arrangements and embodiments of the invention are set forth in the respective subclaims. Reference should now be made to the appended claims.

In short words, prior art unit selection based text-to-speech systems can generate high quality synthetic speech for a variety of applications, but achieve best results for domains and applications that are covered in the base recordings used for synthesizer construction. Prior art methods for the adaptation of a speech synthesizer towards a particular application demand the recording of additional human speech corpora covering additional application-specific text, which is time consuming and expensive, and ideally requires the availability of the original voice talent and recording environment.

The domain adaptation method disclosed in the present teaching overcomes this problem. By making use of statistics generated during the CTTS system runtime, the inventional method examines the acoustic and/or prosodic contexts of the application-specific text, and re-organizes the speech segments in the base data base according to newly created contexts. The latter is achieved by application-specific decision tree modifications. Thus, in contrast to prior art, adaptation of a CTTS system according to the present invention only requires a relatively small amount of application-specific text, and no additional speech recordings at all. It therefore allows the creation of application-specific synthesizers with improved output speech quality for arbitrary domains and applications at very low cost.

According to its broadest aspect the present invention discloses a method and respectively programmed computer system for updating a concatenative Text-To-Speech System (CTTS) with a speech database from a base version to a new version,
a) wherein the CTTS system uses segments of natural speech, stored in its original form or any parametric representation, which is obtained by recording a base text,
b) wherein the recorded speech is dissected into a plurality of synthesis units, e.g., subphones (preferably 1/3 of a phone), phones, diphones, or syllables,
c) wherein speech is synthesized by a concatenation and modification of said synthesis units,
d) wherein said base speech database comprises a base plurality of acoustic and/or prosodic context classes derived from and thus matching said base text,
   wherein the method of updating to a new data base better suited for synthesizing text from a predetermined target application comprises:
   e) the specification of a new text corpus subset basically not completely covered by the base speech database,
   f) the collection of acoustic contexts from the base version speech database that are present in the target application,
   g) discarding acoustic context classes which remain unused when the CTTS system is used for synthesizing new text of said target application,
   h) creating new context classes from said discarded ones, and
   i) re-indexing the speech database reflecting the newly created context classes.

Preferably, the speech segments are organized in a clustered hierarchy of subsets of speech segments, or even in a tree-like hierarchy, as this provides a fast runtime operation.

Preferably, both the removal of unused acoustic and/or prosodic contexts and the creation of new context classes are implemented as operations on decision trees, such as pruning (removal of subtrees) and split-and-merge (for the creation of new subtrees).

Further, the method can be enriched advantageously with the following weighting function comprising the steps of:
a) analyzing which of the synthesis units under a single given leaf are used with which frequency, and
b) triggering a speech database update procedure without human intervention, when a predetermined condition is met.

This helps to keep small the size of the new speech database and speeds up the segment search, thus improving the scalability of the application, and it allows to update a speech database without a major human intervention.

Further, the method can be advantageously applied for a plurality of portlets producing each a voice output. Then each of said portlets can be equipped with a portlet-specific database 18.

Further, preferably, the inventional method can also be performed automatically without a human trigger, i.e. as an "online-adaptation", with the following steps:
a) collecting CTTS-quality data during runtime of said CTTS system,
b) checking a predetermined CTTS-update condition and
c) performing a speech database update procedure according to precedent aspect without human intervention, when said predetermined CTTS update condition is met.

The main benefits of the invention result from the fact, that - different from state-of-the-art approaches - it does not require the additional recording of application-specific prompts:
a) Improved quality of synthetic speech is achieved without additional costs.
b) Application lifetime is increased, since adaptation can be applied, whenever the design of the application changes.
c) Being based on domain specific text only, it lowers the skills needed for the creation and maintenance of speech synthesizers for special domains.

In experiments performed by the inventors a domain specific speech synthesizer was created from a general domain baseline system. An up to 30 percent reduction was observed in the number of non-contiguous segments (splices) in synthetic speech, when applying the methods of the present invention as described below in more detail. From previous evaluations this is known to be a clear evidence for an improved quality of the synthetic speech.

### 3. BRIEF DESCRIPTION OF THE DRAWINGS

The present invention is illustrated by way of example and is not limited by the shape of the figures of the drawings in which:
Figure 1 is a prior art schematic block diagram representation of a CTTS and its basic structural and functional elements,
Figure 2 is a schematic block diagram showing details of the dataset construction for the backend system in figure 1,
Figure 3 is a prior art schematic block diagram overview representation when a CTTS is updated to a new user application,
Figure 4 is an inventional diagram according to figure 3,
Figure 5 is a schematic sketch of the main steps when applying a preferred embodiment of the invention,
Figure 6 depicts an exemplary portion of the general domain synthesizer's decision tree together with the stored questions and speech segments,
Figure 7 is a control flow diagram of the steps performed during runtime of a CTTS improved by a further preferred embodiment of the invention.

### 4. DETAILED DESCRIPTION OF THE PREFERRED EMBODIMENTS

The following two embodiments both make use of the general inventional idea of adapting a general domain CTTS system by restructuring its speech database in a fashion that relies on the analysis of some text specific for the application for which the adaptation process is to be carried out.
Both embodiments rely on the prerequisites that first the synthesizer uses one or more decision tree or decision network for the selection of candidate speech segments that are subject to further evaluation by the concatenation engine's search module, and second, that the target application is defined by a representative, but not necessarily exhaustive, text corpus.

### 4.1. INTRODUCTION TO THE PREFERRED EMBODIMENTS

In order to allow a fast selection of candidate speech segments during runtime, decision trees for each synthesis unit - e.g. for phones or, preferably, sub-phones - are trained as part of the synthesizer construction process, and same decision trees are traversed during synthesizer runtime.

Decision tree growing divides the general domain training data aligned to a particular synthesis unit into a set of homogeneous regions, i.e. a number of clusters with similar spectral or prosodic properties, and thus similar sound. It does so by starting with a single root node holding all the data, and by iteratively asking questions about a unit's phonetic and/or prosodic context, e.g. of the form:
- Is the phone to the left a vowel?
- Is the phone two positions to the right a plosive?
- Is the current phone part of a word-initial syllable?

In each step of the process, the question that yields the best result with respect to some pre-defined measurement of homogeneity is stored in the node, and two successor nodes are created which hold all data that yield a positive (or negative, respectively) answer to the selected question. The process stops, if a given number of leaves, i.e. nodes without successors, is reached.

During runtime, after baseform generation by the synthesizer's front end, the decision tree for each required synthesis unit is traversed from top to bottom by asking the question stored in each node and following the respective YES- or NO-branch until a leaf node is reached. The speech segments associated to these leaves are now suitable candidate segments from which the concatenation engine has to select the segment that - in terms of a pre-defined cost function - best matches the requirements imposed by the front end as well as the already synthesized speech. So far works prior art.

Now, if text from a new domain or application has to be synthesized, the same runtime procedure is carried out using the general domain synthesizer's decision tree. However, since the decision tree was designed to discriminate speech segments according to the acoustic and/or prosodic contexts in the training data, traversal of the tree will frequently end in the very same leaves, therefore making only a small fraction of all speech segments available for further search. As a consequence, the prior art back end may search a list of candidate speech segments that are less suited to meet the prosody targets specified by the front end, and output speech of less than optimal quality will be produced.

Domain specific adaptation of context classes, as provided by the present invention, will overcome this problem by altering the list of candidate speech segments, thus allowing the back end search to access speech segments that potentially better match the prosodic targets specified by the front end. Thus, better output speech is produced without the incorporation of additionally recorded domain specific speech material, as it is required by prior art synthesizer adaptation methods.

For the purpose of domain adaptation, the following three general steps are performed by both computer programs implementing the preferred embodiments of the inventional method:
1. Context identification 450: In this step an inventional back-end program component collects those acoustic contexts from the general domain synthesizer that are present in the new text of the new (target) application.
2. Decision tree adaptation 460: This step creates new context classes by decision tree pruning and/or refinement.
3. Re-indexing 470 of the speech data base: This step tags the synthesizer's speech database according to the newly created context classes, and optionally also reduces the database size.

### 4.2 FIRST EMBODIMENT

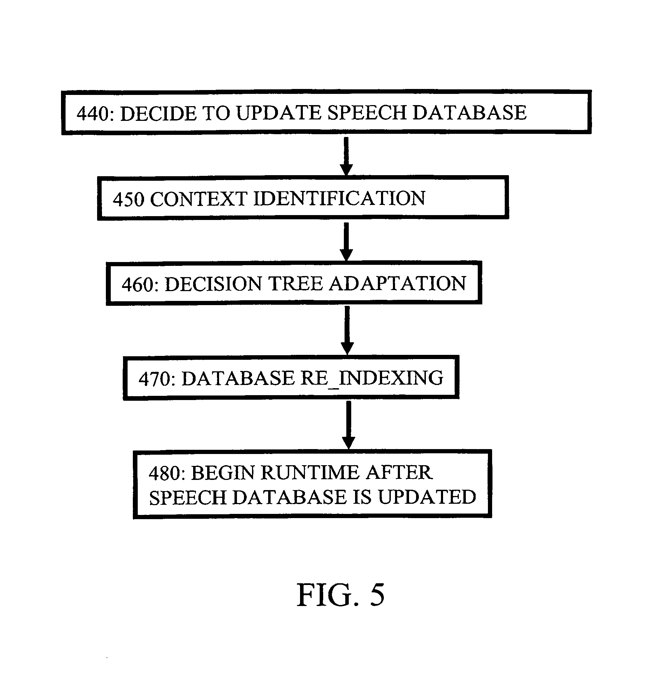

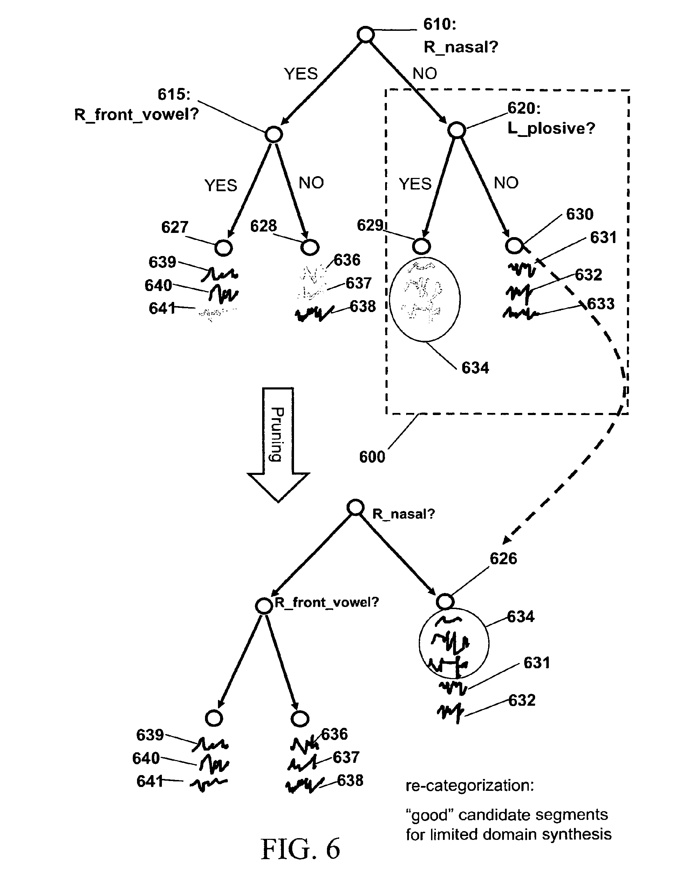

In a first preferred embodiment the inventional program is implemented as a feature within a prior art synthesis engine 16 (see figure 1) thus yielding an inventional synthesis engine which is run for updating a basic speech database 18 in order to adapt it to a new application. With additional reference to figure 4, application specific input text 31 is provided to the inventional synthesis engine, which performs the method according to this embodiment depicted in block 40 in overview form. The single steps of the procedure 40 are depicted in figure 5, and additional references are made to figure 6, which depicts an exemplary portion of the general domain synthesizer's decision tree together with the stored questions and speech segments.

The method begins with a decision 440 to perform an update of the speech database 18.

The context identification step 450 is implemented in the inventional program component - which is preferably a part of the synthesis engine - and uses the pre-existing general domain synthesizer with decision trees in figure 6 for analyzing the acoustic and/or prosodic contexts of the above mentioned adaptation corpus 31. The exemplary contexts and the numerous further contexts not depicted in the drawing build up the context classes referred to in the appended claims.

Exemplarily, and with reference to figure 6 the decision tree leaves 627, 628, 629, 639 und 626 are called "contexts"; reference numbers 631 - 641 are referred to as "speech segments", thus having a specific context, i.e, the leaf node under which they are inserted in the tree.

For that context identification purpose, a preferred implementation performs the following steps:
a) run the general domain synthesizer's front end to obtain a phonetic/prosodic description, i.e. baseforms and intonation contours, of the adaptation corpus,
b) traverse the decision tree, as described above, for each requested phone or sub-phone until a leaf node is reached and increase a counter associated with each decision tree leaf,
c) compare the above mentioned counters to a predetermined and adjustable threshold.

As a result, it obtains two disjoint sets of decision tree leaves, a first one with counter values above said threshold, and a second one with counters below said threshold. While leaves 627, 628, 629 in the first set carry the speech segments 634 and 636,...,641 for acoustic and/or prosodic contexts present in the application specific new text, leaf 630 from the second set holds speech segments 631,...,633 that are not accessible by the new application due to the previously mentioned context mismatch of training data and new application.

Then, in a next step 460 the program component implementing this embodiment performs a decision tree adaptation procedure which is best implemented as an iterative process that discards and/or creates acoustic contexts based on the information collected in the precedent context identification step 450. Assuming a binary decision tree, we can distinguish three different situations:
1. Both of two leaves with a common parent node are unused, i.e. have counters with values below a fixed threshold: In this case the counters from both leaves are combined (added) into a new counter. The two leaves are discarded, and the associated speech segments are attached to the parent node. The latter now becomes a new leaf that represents a coarser acoustic context with a new usage counter.
2. One of two leaves with a common parent node is unused: The same action as in the first case is taken. This situation is depicted in the upper part of figure 6 for the unused leaf 630 and parent node 620 in the right branch of the tree.
3. Both of two leaves with a common parent node are used: In this case, depicted in the upper part of figure 6 for parent node 615, the differentiation of contexts provided by the original decision tree is also present in the phonetic notation of the adaptation data. Thus, both leaves are either kept or further refined by means of state-of-the-art decision tree growing.

By comparing the new leaves' usage counters to a new threshold (which may be different to the previous one), the process creates two new sets of (un-)used leaves in each iteration, and stops if either no further pruning is applicable or a stop criterion, for example a predefined number of leaves, or speech segments per leaf, has been reached.

The lower part of figure 6 depicts the result of decision tree adaptation: As obvious to the skilled reader, the pruning step renders the acoustic context temporarily coarser than present in the basic speech database, thereby making available the previously not reachable speech segments 631 and 632 in a new walk through the adapted decision tree. As depicted in figure 6, according to experiments performed by the inventors the process described here creates smaller decision trees and thus increases the number of speech segments attached to each leaf. Since this usually results in more candidate segments to be considered by the back-end search, state-of-the-art data driven pre-selection based on the adaptation corpus can be additionally used to reduce the number of speech segments per leaf in the recategorized tree structure and thus for a reduction of the computational load. In figure 6, this situation is depicted by the suppression of speech segment 633.

Then, in a final adaptation step 470 the inventional program component re-builds the speech database storing all the speech segments by means of a re-indexing procedure, which transforms the new tree structure into a respective new database structure having a new arrangement of table indexes.

Finally, the speech database is completely updated in step 480, still comprising only the original speech segments, but now being organized according to the characteristic acoustic and/or prosodic contexts of the new domain. Thus, the adapted database and decision tree can be used instead of their general domain counterparts in normal runtime operation mode.

### 4.3 SECOND EMBODIMENT

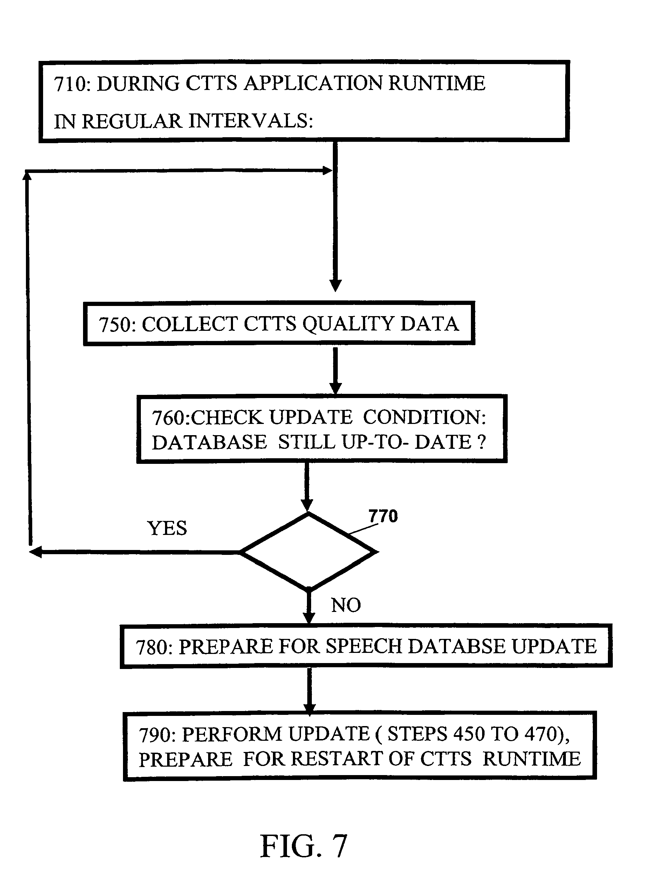

A second embodiment discloses a modified inventional synthesis engine 16 which is implemented to automatically adapt the CTTS system's speech database 18 (figure 1) and associated acoustic/prosodic decision tree during application runtime. This feature of "online adaptation" is preferably implemented as an additional component of the synthesis engine, which can be switched active or not. The system view is the same as described in the foregoing embodiment, whereas the control flow is depicted in figure 7.

The decision for performing a database adaptation is achieved by a procedure which is executed in regular intervals, e.g. after the synthesis of a predetermined number of words, phrases, or sentences, and which basically comprises:
a) the collection of some data describing the synthesizer's behavior that has been found useful for an assessment of the quality of the synthetic output speech, i.e. "descriptive data",
b) the activation of a speech database update procedure as described above, preferably without human intervention, if above mentioned data meets a predetermined condition.

The descriptive data mentioned above can include, but is not limited to, any (combination) of the following:
a) the average number of non-contiguous speech segments that are used for the generation of the output speech,
b) the average synthesis costs, i.e. the average value of the cost function used for the final selection of speech segments from the list of candidate segments,
c) the average number of decision tree leaves (or, in other words: acoustic/prosodic contexts) that are visited, if the list of candidate speech segments is computed.

During application runtime the inventional engine collects above mentioned descriptive data, which allows the judgement of the quality of the CTTS system and are thus called CTTS quality data (step 750) and checks it against a predetermined CTTS update condition 760.

If the condition is not met, the system continues to synthesize speech using the current (original) versions of the acoustic/prosodic decision trees and speech segment database, see the YES-Branch in block 770. Otherwise (NO-Branch) the current version of the system is considered as being not sufficient for the given application, and in a step 780 the CTTS system is prepared for a database update procedure. This preparation can be implemented by defining a time during run-time, where it can be reasonably expected that the update-procedure does not interrupt a current CTTS application session.

Thus, as a skilled reader may appreciate, the fore-going embodiment of the present invention offers an improved quality of synthetic speech output for a particular application or domain without imposing restrictions on the synthesizer's universality and without the need of additional speech recordings.

It should be noted that the term "application" - as used in this disclosure - does not necessarily refer to a single task with a static set of prompts, but can also refer to a set of different, dynamically changing applications, e.g. a set of voice portlets in a web portal application as e.g., the WebSphere Voice Application Access environment. It is further important to notice that in the case of a multilingual text-to-speech system, these applications are not required to output speech in one and the same language.

While the basic idea of decision tree adaptation has been disclosed in detail for the determination of domain specific acoustic contexts, the adaptation of other decision trees used by the synthesizer 16, e.g. for the computation of loudness, pitch, and duration, can also be performed by following the principles described above.

Further, instead of a decision tree implementation, also other tree-like data structures, such as a hierarchy of speech segment clusters, can be used for finding a set of candidate speech segments that best match the requirements imposed by the CTTS systems's front end. In this case, the questions being asked for finding the appropriate decision tree leaf are replaced by some distance measure which is used to identify a cluster (subset of speech segments) that best match front end requirements, but the general inventional idea remains the same.

The present invention can be realized in hardware, software, or a combination of hardware and software. A synthesis tool according to the present invention can be realized in a centralized fashion in one computer system, or in a distributed fashion where different elements are spread across several interconnected computer systems. Any kind of computer system or other apparatus adapted for carrying out the methods described herein is suited. A typical combination of hardware and software could be a general purpose computer system with a computer program that, when being loaded and executed, controls the computer system such that it carries out the methods described herein.

The present invention can also be embedded in a computer program product, which comprises all the features enabling the implementation of the methods described herein, and which - when loaded in a computer system - is able to carry out these methods.

Computer program means or computer program in the present context mean any expression, in any language, code or notation, of a set of instructions intended to cause a system having an information processing capability to perform a particular function either directly or after either or both of the following:
a) conversion to another language, code or notation;
b) reproduction in a different material form.

## Claims

1. A method for updating a concatenative Text-To-Speech (CTTS) system (10) with a speech database (18) from a base version to a new version of a given target application,
wherein:
a) the CTTS system (10) uses segments of natural speech, stored in its original form or any parametric representation, which is obtained by recording a base text (11),
b) the recorded speech is dissected into a plurality of synthesis units,
c) speech is synthesized by a concatenation and modification of said synthesis units, and
d) wherein said base speech database (18) comprises a base plurality of acoustic and/or prosodic context classes derived from and thus matching said base text (11), **comprising** the steps of:
e) specifying a new text corpus subset (31) not completely covered by the base speech database (18),
f) collecting (450) acoustic context classes (627,..,629) from the base version speech database (18) that are present in said target application,
g) discarding (460) acoustic context classes (630) with speech segments (631,632,633) that remain unused when the CTTS system is used for synthesizing new text of said target application,
h) creating (460) new context classes (629) from said discarded ones, and
i) re-indexing (470) the speech database (18) reflecting the both the remaining original (627, 628) and the newly created context classes (626), **characterized in that**
j) speech segments are organized in a clustered hierarchy of subsets of speech segments,
k) said hierarchy is implemented in a tree-like data structure, and
l) an application specific weighting function is implemented which provides for a priorization between speech segments (631, 632, 634) present at one and the same newly created acoustic context tree leaf (626).

2. The method according to the preceding claim, wherein a removal (460) of unused acoustic and/or prosodic contexts is implemented by pruning subtrees of said tree-like data structure, and the creation (460) of new context classes is implemented by a split and merge of subtrees.

3. The method according to claim 1, further comprising the steps of:
a) collecting (750) CTTS-quality data during runtime of said CTTS system,
b) checking (760, 770) a predetermined CTTS-update condition and
c) performing a speech database update procedure (780,790) according to claim 1 without human intervention, when said predetermined CTTS update condition is met.

4. The method according to claim 1, wherein a plurality of portlets producing each a voice output is equipped with a portlet-specific database (18).

5. A method for updating a concatenative Text-To-Speech (CTTS) system (10) with a speech database (18) from a base version to a new version of a given target application, wherein:
a) the CTTS system (10) uses segments of natural speech, stored in its original form or any parametric representation, which is obtained by recording a base text (11),
b) the recorded speech is dissected into a plurality of synthesis units,
c) speech is synthesized by a concatenation and modification of said synthesis units, and
d) wherein said base speech database (18) comprises a base plurality of acoustic and/or prosodic context classes derived from and thus matching said base text (11), **characterized by** the steps of:
e) collecting (750) CTTS-quality data during runtime of said CTTS system,
f) checking (760, 770) a predetermined CTTS-update condition and
g) performing a speech database update procedure (780,790) according to the following steps without human intervention, when said predetermined CTTS update condition is met:
h) specifying a new text corpus subset (31) not completely covered by the base speech database (18),
i) collecting (450) acoustic context classes (627,..,629) from the base version speech database (18) that are present in said target application,
j) removing (460) acoustic context classes (630) with speech segments (631,632,633) that remain unused when the CTTS system is used for synthesizing new text of said target application, wherein said removal (460) of unused acoustic and/or prosodic contexts is implemented by pruning subtrees of said tree-like data structure
k) creating (460) new context classes (629) from said removed ones, by a split and merge of subtrees and
l) re-indexing (470) the speech database (18) reflecting the both the remaining original (627, 628) and the newly created context classes (626).

6. A concatenative Text-To-Speech (CTTS) system, comprises a synthesis engine (16) implementing a functional component adapted to perform the steps of a method according to one of the preceding claims 1 to **5**.

7. A computer program for execution in a data processing system comprising software code portions adapted to perform a method according to anyone of the preceding claims 1 to **5** when said computer program is run on a computer.

8. A computer program product stored on a computer usable medium comprising computer readable program means for causing a computer to perform the method of anyone of the claims 1 to **5**, when said computer program product is executed on a computer.

## Patentansprüche

1. Verfahren, um ein Text-in-Sprache-Verknüpfungssystem (CTTS-System) (10) mit einer Sprachdatenbank (18) von einer Basisversion auf eine neue Version einer bestimmten Zielanwendung zu aktualisieren, wobei
a) das CTTS-System (10) Segmente einer natürlichen Sprache verwendet, die in ihrer ursprünglichen Form oder einer beliebigen parametrischen Darstellung gespeichert werden, welche man durch Aufzeichnen eines Basistextes (11) erhält,
b) die aufgezeichnete Sprache in eine Vielzahl von Synthese-Einheiten gegliedert wird,
c) Sprache durch eine Verknüpfung und Änderung der Synthese-Einheiten synthetisiert wird, und
d) wobei die Basis-Sprachdatenbank (18) eine grundlegende Vielzahl an akustischen und/oder prosodischen Kontextklassen umfasst, die von dem Basistext (11) abgeleitet werden und folglich mit diesem übereinstimmen, wobei dies die folgenden Schritte **umfasst:**
e) Angeben einer neuen Textkörper-Teilgruppe (31), die von der Basissprachdatenbank (18) nicht vollständig abgedeckt wird,
f) Erfassen (450) von akustischen Kontextklassen (627, ..., 629) von der Basisversion-Sprachdatenbank (18), die in der Zielanwendung vorhanden sind,
g) Verwerfen (460) von akustischen Kontextklassen (630) mit Sprachsegmenten (631, 632, 633), die unbenutzt bleiben, wenn das CTTS-System zur Synthetisierung von neuem Text der Zielanwendung verwendet wird,
h) Erzeugen (460) von neuen Kontextklassen (629) aus den verworfenen Kontextklassen und
i) erneutes Indexieren (470) der Sprachdatenbank (18), wobei sowohl die verbleibenden ursprünglichen Kontextklassen (627, 628) als auch die neu erzeugten Kontextklassen (626) widergespiegelt werden, **dadurch gekennzeichnet, dass**
j) Sprachsegmente in eine aus Gruppen bestehende Hierarchie mit Untergruppen von Sprachsegmenten gegliedert werden,
k) die Hierarchie in einer baumähnlichen Datenstruktur realisiert wird und
l) eine anwendungsspezifische Gewichtungsfunktion vorgesehen wird, die eine Festlegung der Prioritätsrangfolge zwischen Sprachsegmenten (631, 632, 634) ermöglicht, die an ein und demselben neu erzeugten Blatt (626) des akustischen Kontextbaums vorhanden sind.

2. Verfahren nach dem vorhergehenden Anspruch, wobei ein Entfernen (460) von nicht verwendeten akustischen und/oder prosodischen Kontexten durchgeführt wird, indem Teilbäume der baumähnlichen Datenstruktur gekürzt werden, und die Erzeugung (460) von neuen Kontextklassen durchgeführt wird, indem Teilbäume aufgespalten und zusammengeführt werden.

3. Verfahren nach Anspruch 1, das des Weiteren die folgenden Schritte umfasst:
a) Erfassen (750) von Daten in CTTS-Qualität während der Laufzeit des CTTS-Systems,
b) Prüfen (760, 770) einer vorher festgelegten CTTS-Aktualisierungsbedingung und
c) Durchführen einer Aktualisierungsprozedur (780, 790) an der Sprachdatenbank nach Anspruch 1 ohne Eingreifen des Benutzers, wenn die vorher festgelegte CTTS-Aktualisierungsbedingung erfüllt ist.

4. Verfahren nach Anspruch 1, wobei eine Vielzahl von Portlets, von denen jedes eine Sprachausgabe erzeugt, mit einer portlet-spezifischen Datenbank (18) ausgestattet ist.

5. Verfahren, um ein Text-in-Sprache-Verknüpfungssystem (CTTS-System) (10) mit einer Sprachdatenbank (18) von einer Basisversion auf eine neue Version einer bestimmten Zielanwendung zu aktualisieren, wobei:
a) das CTTS-System (10) Segmente einer natürlichen Sprache verwendet, die in ihrer ursprünglichen Form oder einer beliebigen parametrischen Darstellung gespeichert werden, welche man durch Aufzeichnen eines Basistextes (11) erhält,
b) die aufgezeichnete Sprache in eine Vielzahl von Synthese-Einheiten gegliedert wird,
c) Sprache durch eine Verknüpfung und Änderung der Synthese-Einheiten synthetisiert wird, und
d) wobei die Basis-Sprachdatenbank (18) eine grundlegende Vielzahl an akustischen und/oder prosodischen Kontextklassen umfasst, die von dem Basistext (11) abgeleitet werden und folglich mit diesem übereinstimmen, wobei dies durch die folgenden Schritte **gekennzeichnet** ist:
e) Erfassen (750) von Daten in CTTS-Qualität während der Laufzeit des CTTS-Systems,
f) Prüfen (760, 770) einer vorher festgelegten CTTS-Aktualisierungsbedingung und
g) Durchführen einer Aktualisierungsprozedur (780, 790) an der Sprachdatenbank gemäß den folgenden Schritten ohne Eingreifen des Benutzers, wenn die vorher festgelegte CTTS-Aktualisierungsbedingung erfüllt ist:
h) Angeben einer neuen Textkörper-Teilgruppe (31), die von der Basissprachdatenbank (18) nicht vollständigabgedeckt wird,
i) Erfassen (450) von akustischen Kontextklassen (627, ..., 629) von der Basisversion-Sprachdatenbank (18), die in der Zielanwendung vorhanden sind,
j) Entfernen (460) von akustischen Kontextklassen (630) mit Sprachsegmenten (631, 632, 633), die unbenutzt bleiben, wenn das CTTS-System zur Synthetisierung von neuem Text der Zielanwendung verwendet wird, wobei das Entfernen (460) von unbenutzten akustischen und/oder prosodischen Kontexten durchgeführt wird, indem Teilbäume der baumähnlichen Datenstruktur gekürzt werden,
k) Erzeugen (460) von neuen Kontextklassen (629) aus den entfernten Kontextklassen, indem Teilbäume aufgespalten und zusammengeführt werden, und
l) erneute Indexierung (470) der Sprachdatenbank (18), wobei die erneute Indexierung sowohl die verbleibenden ursprünglichen Kontextklassen (627, 628) als auch die neu erzeugten Kontextklassen (626) widerspiegelt.

6. Text-in-Sprache-Verknüpfungssystem (CTTS-System), das eine Synthese-Maschine (16) umfasst, die eine Funktionskomponente vorsieht, welche so ausgelegt ist, dass sie die Schritte eines Verfahrens nach einem der vorhergehenden Ansprüche 1 bis 5 durchführt.

7. Rechnerprogramm zur Ausführung in einem Datenverarbeitungssystem, das Teile von Software-Code umfasst, die so ausgelegt sind, dass sie ein Verfahren nach einem der vorhergehenden Ansprüche 1 bis 5 durchführen, wenn das Rechnerprogramm auf einem Rechner ausgeführt wird.

8. Rechnerprogramm-Produkt, das auf einem von einem Rechner nutzbaren Datenträger gespeichert wird und ein rechnerlesbares Programmmittel umfasst, um einen Rechner zu veranlassen, das Verfahren nach einem der Ansprüche 1 bis 5 durchzuführen, wenn das Rechnerprogramm-Produkt auf einem Rechner ausgeführt wird.

## Revendications

1. Procédé de mise à jour d'un système de concaténation de conversion de texte en parole (CTTS) (10) comportant une base de données de parole (18) à partir d'une version de base à une nouvelle version d'une application cible donnée, dans lequel :
a) le système CTTS (10) utilise des segments de parole naturelle, mémorisés dans leur forme d'origine ou une représentation paramétrique quelconque, qui est obtenue en enregistrant un texte de base (11),
b) la parole enregistrée est découpée en une pluralité d'unités de synthèse,
c) la parole est synthétisée par une concaténation et une modification desdites unités de synthèse, et
d) dans lequel ladite base de données de parole de base (18) comprend une pluralité de bases de classes de contextes acoustiques et/ou prosodiques obtenues à partir dudit texte de base (11), et correspondant donc à celui-ci, **comprenant** les étapes consistant à :
e) spécifier un nouveau sous-ensemble de corpus de texte (31) qui n'est pas complètement couvert par la base de données de parole de base (18),
f) recueillir (450) des classes de contextes acoustiques (627, ..., 629) à partir de la base de données de parole de version de base (18) qui sont présentes dans ladite application cible,
g) ignorer (460) les classes de contextes acoustiques (630) comportant des segments de parole (631, 632, 633) qui restent inutilisés lorsque le système CTTS est utilisé pour synthétiser un nouveau texte de ladite application cible,
h) créer (460) de nouvelles classes de contextes (629) à partir desdites classes ignorées, et
i) réindexer (470) la base de données de parole (18) reflétant à la fois les classes de contextes d'origine restantes (627, 628) et les classes de contextes nouvellement créées (626), **caractérisé en ce que**
j) **des segments de parole sont organisés en une hiérarchie regroupée de sous-ensembles de segments de parole,**
k) **ladite hiérarchie est mise en oeuvre dans une structure de données du type à arborescence et**
**l) une fonction de pondération spécifique à l'application est mise en oeuvre, laquelle permet d'affecter des priorités entre les segments de parole (631, 632, 634) présents au niveau d'un seul et même noeud de terminaison d'arborescence de contexte acoustique nouvellement créé (626).**

2. Procédé selon la revendication précédente, dans lequel l'élimination (460) de contextes acoustiques et/ou prosodiques non utilisés est mise en oeuvre en élaguant les sous-arborescences de ladite structure de données du type à arborescence, et la création (460) de nouvelles classes de contextes est mise en oeuvre par une séparation et une fusion des sous-arborescences.

3. Procédé selon la revendication 1, comprenant en outre les étapes consistant à :
a) recueillir (750) des données de qualité de système CTTS au cours du temps d'exécution dudit système CCTS,
b) contrôler (760, 770) une condition de mise à jour de système CTTS prédéterminée et
c) exécuter une procédure de mise à jour de base de données de parole (780, 790) conformément à la revendication 1 sans intervention humaine lorsque ladite condition de mise à jour de système CTTS prédéterminée est satisfaite.

4. Procédé selon la revendication 1, dans lequel une pluralité de portlets produisant chacun une sortie vocale est équipée d'une base de données spécifique aux portlets (18).

5. Procédé de mise à jour d'un système de concaténation de conversion de texte en parole (CTTS) (10) comportant une base de données de parole (18) à partir d'une version de base à une nouvelle version d'une application cible donnée, dans lequel :
a) le système CTTS (10) utilise des segments de parole naturelles, mémorisés dans sa forme d'origine ou une représentation paramétrique quelconque, qui est obtenue en enregistrant un texte de base (11),
b) la parole enregistrée est découpée en une pluralité d'unités de synthèse,
c) la parole est synthétisée par une concaténation et une modification desdites unités de synthèse, et
d) dans lequel ladite base de données de parole de base (18) comprend une pluralité de bases de classes de contextes acoustiques et/ou prosodiques obtenues à partir dudit texte de base (11), et correspondant donc à celui-ci, **caractérisé par** les étapes consistant à :
e) recueillir (750) des données de qualité du système CTTS au cours du temps d'exécution dudit système CTTS,
f) contrôler (760, 770) une condition de mise à jour de système CTTS prédéterminée et
g) exécuter une procédure de mise à jour de base de données de parole (780, 790) conformément aux étapes suivantes sans intervention humaine, lorsque ladite condition de mise à jour de système CTTS prédéterminée est satisfaite,
h) spécifier un nouveau sous-ensemble de corpus de texte (31) non complètement couvert par ladite base de données de parole de base (18),
i) recueillir (450) des classes de contextes acoustiques (627, ..., 629) à partir de la base de données de parole de version de base (18) qui sont présentes dans ladite application cible,
j) éliminer (460) des classes de contextes acoustiques (630) comportant des segments de parole (631, 632, 633) qui restent inutilisés lorsque le système CTTS est utilisé pour synthétiser un nouveau texte de ladite application cible, où ladite élimination (460) de contextes acoustiques et/ou prosodiques non utilisés est mise en oeuvre en élaguant des sous-arborescences de ladite structure de données du type à arborescence,
k) créer (460) de nouvelles classes de contextes (629) à partir desdites classes éliminées, par une séparation et une fusion des sous-arborescences, et
l) réindexer (470) la base de données de parole (18) reflétant à la fois les classes de contextes d'origine restantes (627, 628) et les classes de contextes nouvellement créées (626).

6. Système de concaténation de conversion de texte en parole (CTTS) comprenant un moteur de synthèse (16) mettant en oeuvre un composant fonctionnel conçu pour exécuter les étapes d'un procédé selon l'une des revendications précédentes 1 à 5.

7. Programme informatique d'exécution d'un système de traitement de données comportant des parties de code logiciel conçues pour exécuter un procédé selon l'une quelconque des revendications précédentes 1 à 5 lorsque ledit programme informatique est exécuté sur un ordinateur.

8. Produit de programme informatique mémorisé sur un support utilisable par un ordinateur comprenant un moyen de programme lisible par un ordinateur destiné à amener un ordinateur à exécuter le procédé selon l'une quelconque des revendications 1 à 5, lorsque ledit produit de programme informatique est exécuté sur un ordinateur.
